# FASCICULE DE BREVET EUROPEEN

(11) **EP 2 430 644 B1**
(45) Date de publication et mention de la délivrance du brevet: **11.04.2018**
(21) Numéro de dépôt: 10727084.5
(22) Date de dépôt: 03.05.2010
(51) Int. Cl.: H01G 9/00

(54) **DISPOSITIF ÉLECTRIQUE PORTATIF POUR LA DÉCHARGE RAPIDE DE SUPER-CONDENSATEURS**
TRAGBARE ELEKTRISCHE VORRICHTUNG ZUR SCHNELLEN ENTLADUNG VON SUPERKONDENSATOREN
PORTABLE ELECTRIC DEVICE FOR FAST DISCHARGE OF SUPERCAPACITORS

(30) Priorité: 15.05.2009 FR 0953219
(43) Date de publication de la demande: 21.03.2012
(73) Titulaire: PSA Automobiles SA, 78300 Poissy (FR)
(72) Inventeur: MOEZ, Charlotte, F-92140 Clamart (FR); LANCELLE-BELTRAN, Emmanuelle, F-92220 Bagneux (FR); JAROSZ, Antoine, F-92400 Courbevoie (FR)
(74) Mandataire: Fernandez, Francis Lionel
(86) Numéro de dépôt international: PCT/FR2010/050838
(87) Numéro de publication internationale: WO 2010/130918

(56) Documents cités:
- EP-A1- 0 447 928
- EP-A1- 1 744 433
- EP-A2- 1 724 797
- DE-A1- 4 104 098
- KAINUO INDUSTRY CO, LTD.: "LED Work light with Cable" 28 avril 2008 (2008-04-28), XP002567898 Extrait de l'Internet: URL:http://www.tradekey.com/product_view/i d/557409.htm [extrait le 2010-02-08]

## Description

L'invention concerne les super-condensateurs (ou « ultra-capacités ») qui équipent certains systèmes, comme par exemple et non limitativement des véhicules (éventuellement de type automobile), et plus précisément la décharge de tels super-condensateurs.

On entend ici par « super-condensateur » un élément éventuellement modulaire comportant une ou plusieurs cellules définissant chacune une ultra-capacité.

Comme le sait l'homme de l'art, dans certains domaines techniques on utilise des super-condensateurs (ou ultra-capacités) pour stocker de l'énergie électrique en vue de la restituer lorsque cela s'avère nécessaire. C'est par exemple le cas dans le domaine de l'automobile où des super-condensateurs servent, par exemple, à fournir de la puissance électrique à des dispositifs de maintien en tension ou à des dispositifs assurant une fonction de contrôle d'arrêt et de redémarrage du moteur (ou « stop and start »).

Afin d'éviter qu'un court-circuit ne se produise en raison de l'état de charge d'un super-condensateur, ou afin de limiter l'effet du vieillissement d'un super-condensateur, notamment pendant le transport, il est avantageux de procéder à la décharge de ce dernier. Pour ce faire, on prévoit dans le circuit électrique dont fait partie ce super-condensateur un dispositif de décharge interne (et donc fixe) qui est mis en marche automatiquement en cas de besoin. Un tel dispositif est notamment décrit dans les documents brevet FR 2760911 et US 2006/176028.

On comprendra que lorsque ce dispositif de décharge interne et/ou sa connexion au réseau 12V est/sont endommagé(e)(s), ledit dispositif n'est plus en mesure de décharger ce super-condensateur, ce qui peut s'avérer (très) dangereux en cas d'accident, mais également sur une chaîne de montage ou dans un garage. Le document EP 0 447 928 montre un dispositif électrique portatif comprenant un boîtier portatif comportant au moins un ensemble électrique propre à consommer, dans un intervalle de temps prédéfini, une quantité d'énergie au moins égale à la quantité d'énergie maximale pouvant être stockée dans un super-condensateur et fonction de sa capacité et de la tension maximale pouvant être présente à ses bornes, et deux moyens de connexion connectés aux bornes dudit ensemble et propres à être connectés temporairement aux bornes dudit super-condensateur en vue de sa décharge par consommation d'énergie par ledit ensemble. L'invention concerne un dispositif électrique portatif de décharge des super-condensateurs selon la revendication 1. L'invention a donc pour but de proposer un dispositif électrique portatif (ou portable) facile d'emploi et permettant de décharger rapidement des super-condensateurs (modulaires ou à une seule cellule) en n'importe quel endroit, y compris dans un environnement dangereux en terme de sécurité électrique.

Elle propose plus précisément à cet effet un dispositif électrique portatif comprenant :
- un boîtier portatif comportant au moins un ensemble électrique propre à consommer, dans un intervalle de temps prédéfini, une quantité d'énergie au moins égale à la quantité d'énergie maximale pouvant être stockée dans un super-condensateur et fonction de sa capacité et de la tension maximale pouvant être présente à ses bornes, et
- deux moyens de connexion connectés aux bornes de l'ensemble et propres à être connectés temporairement aux bornes du super-condensateur en vue de sa décharge par consommation d'énergie par l'ensemble.

Le but de l'invention est de pouvoir décharger rapidement un supercondensateur pour des raisons de sécurité, il s'agit donc de décharger la majeure partie de son charge, préférentiellement au moins 90%, avantageusement au moins 98% ou 99%, et ce, dans un temps raisonnablement court, préférentiellement moins de 10 minutes ou en moins de 5 minutes, avantageusement moins de 2minutes ou moins de 1 minute. Cette décharge s'effectue préférentiellement en une seule phase.

De préférence, l'ensemble électrique ne comprend que des éléments passifs, notamment pas d'éléments capables de fournir de l'énergie, avantageusement que des éléments résistifs ou essentiellement résistifs. La décharge sera purement passive, avantageusement une simple décharge dans un ensemble électrique se comportant comme une simple résistance. Une décharge purement passive présente l'intérêt d'une part d'assurer effectivement une décharge complète ou quasi-complète et d'autre part d'empêcher une recharge du supercondensateur en polarité inversée, ce qui pourrait poser des problèmes de sécurité.

La résistance totale de l'ensemble électrique contenu dans le boîtier portatif est relativement faible pour permettre une décharge dans un temps raisonnablement court, préférentiellement inférieure à 1 ohm, avantageusement inférieure à 0.1 ohm ou 0.2 ohm. De préférence, l'ensemble électrique comprend plusieurs composants électriques en parallèle, dont les résistances sont comparables, c'est-à-dire qu'elles ne varient pas de plus du simple au double entre elles. Un ou plusieurs de ces composants électriques assurant la décharge et disposés en parallèle l'un de l'autre, peuvent être en série avec un élément de résistance différente, comme par exemple une lampe témoin.

De préférence, l'ensemble électrique ne comprend que des résistances et des lampes, avantageusement que des résistances en parallèle et une lampe.

Le dispositif selon l'invention peut comporter d'autres caractéristiques qui peuvent être prises séparément ou en combinaison, et notamment :
- chaque ensemble électrique peut comprendre au moins deux composants électriques propres à consommer de l'énergie et montés en série et/ou en parallèle (ou dérivation) ;
   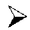 les composants électriques peuvent être choisis parmi (au moins) des résistances, des lampes, des moteurs électriques, des alarmes sonores électriques (ou « buzzers ») et des câbles (ou barres) métalliques de forte section ;
      - certaines résistances peuvent être de type variable ;
      - un ensemble peut comprendre au moins une lampe et au moins une résistance montées en parallèle ;
   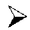 l'un au moins des composants électriques peut servir de témoin de niveau de décharge ;
      - les moyens de connexion peuvent comprendre des pinces de type crocodile, éventuellement interchangeables ;
      - il peut comprendre au moins deux ensembles électriques montés en série et/ou en parallèle.

D'autres caractéristiques et avantages de l'invention apparaîtront à l'examen de la description détaillée ci-après, et des dessins annexés, sur lesquels :
- la figure 1 illustre schématiquement, dans une vue du dessus, un exemple de réalisation de dispositif électrique portatif selon l'invention,
- la figure 2 illustre schématiquement et fonctionnellement, dans une vue du dessus, un premier exemple de réalisation de dispositif électrique portatif selon l'invention, sans son capot et connecté à un super-condensateur, et
- la figure 3 illustre schématiquement et fonctionnellement, dans une vue du dessus, un second exemple de réalisation de dispositif électrique portatif selon l'invention, sans son capot et connecté à un super-condensateur.

Les dessins annexés pourront non seulement servir à compléter l'invention, mais aussi contribuer à sa définition, le cas échéant.

L'invention a pour but d'offrir un dispositif électrique portatif (ou portable) (D) destiné à décharger rapidement des super-condensateurs (SC) (à une ou plusieurs cellules) qui sont implantés dans un système ou qui ont été retirés (démontés) d'un système.

Dans ce qui suit, on considère, à titre d'exemple non limitatif, que les super-condensateurs (SC) sont implantés dans un système tel qu'un véhicule automobile (comme par exemple une voiture). Par exemple un super-condensateur (SC) peut fournir (ou a fourni) de la puissance électrique à un dispositif de maintien en tension ou à un dispositif assurant une fonction de contrôle d'arrêt et de redémarrage du moteur ou encore. Mais, l'invention n'est pas limitée à ce type de système. Elle concerne en effet tout type de système muni d'un circuit électrique comportant au moins un super-condensateur. Ainsi, un super-condensateur peut récupérer de l'énergie électrique lors des freinages afin de la stocker et de la restituer ensuite lors de phases dites « de boost ».

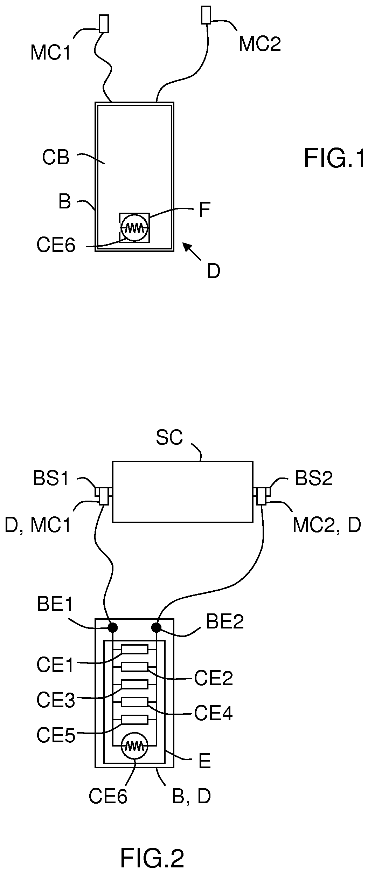

On a schématiquement représenté sur la figure 1 un exemple de réalisation de dispositif (électrique portatif) D. Comme illustré, un tel dispositif D comprend un boîtier portatif B et deux moyens de connexion MCj (j = 1 ou 2).

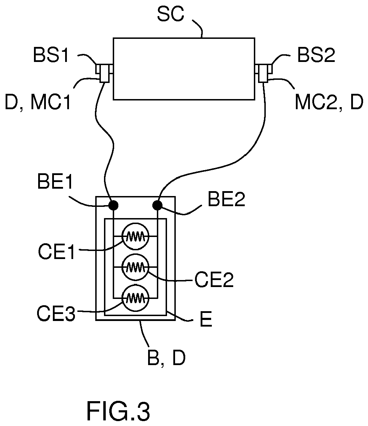

Comme illustré sur les figures 2 et 3, les deux moyens de connexion MCj sont destinés à être respectivement connectés temporairement aux deux bornes BSj d'un super-condensateur SC afin que ce dernier puisse être déchargé par le boîtier (portatif) B. A cet effet ils (MCj) peuvent par exemple comprendre des extrémités libres (opposées au boîtier B) équipées chacune d'une pince de type crocodile. De préférence, ces pinces crocodiles sont interchangeables afin de pouvoir être remplacées facilement en cas d'usure ou de dommage ou en cas de besoin de connecteurs d'un autre type. Ces connecteurs sont de préférence agencés de manière à supporter au moins 10 A en continu.

Le boîtier portatif B comporte au moins un ensemble électrique E qui, d'une part, comprend deux bornes BEj auxquelles sont connectées respectivement les deux moyens de connexion MCj, et d'autre part, est propre à consommer, dans un intervalle de temps prédéfini, une quantité d'énergie qui est au moins égale à la quantité d'énergie maximale qui peut être stockée dans un super-condensateur SC. Cette quantité d'énergie maximale est fonction de la capacité de ce super-condensateur SC et de la tension maximale qui peut être présente à ses bornes.

On comprendra qu'une fois que les deux moyens de connexion MCj sont connectés aux deux bornes BSj d'un super-condensateur SC, l'ensemble E peut, du fait que ses bornes BEj sont respectivement connectées auxdits moyens de connexion MCj, consommer l'énergie électrique qui est stockée dans ce super-condensateur SC, et ainsi le décharger.

Un ensemble (électrique) E peut par exemple comprendre au moins deux composants électriques (ou électroniques) CEi propres à consommer de l'énergie et montés en série et/ou en parallèle.

Ces composants électriques CEi peuvent par exemple être choisis parmi des résistances, des lampes, des moteurs électriques, des alarmes sonores électriques (ou « buzzers ») et des câbles (ou barres) métalliques de forte section, et plus généralement tout type de composant capable de consommer de l'énergie électrique en la dissipant, par exemple par convection naturelle ou par ventilation, et/ou en la transformant en une énergie d'un autre type, comme par exemple des radiations (lumineuses (lampe) ou autres) ou une énergie mécanique.

On notera que si l'ensemble E comprend au moins une résistance CEi, celle-ci peut être éventuellement de type variable afin de permettre l'adaptation de l'ensemble E au super-condensateur SC à décharger.

A titre d'exemple non limitatif, un ensemble E peut comprendre au moins une lampe CEi et au moins une résistance CEi montées en parallèle. C'est notamment le cas de l'exemple de réalisation illustré sur la figure 2. Plus précisément, dans cet exemple non limitatif, l'ensemble E comprend cinq résistances CE1 à CE5 et une lampe CE6 montées en parallèle. Par exemple, les résistances CE1 à CE5 sont montées sur un dissipateur thermique (par exemple en aluminium) chargé de capter la chaleur qu'elles dégagent et de la dissiper. Par ailleurs, chaque résistance CEi peut par exemple posséder une très petite résistance (typiquement égale à environ 0,1 Ω) et dissiper 50 W, et la lampe CE6 peut être une ampoule de 3,7 V ou 4,5 V montée sur une douille support. Les résistances CE1 à CE5 et la lampe CE6 peuvent par exemple être reliées en parallèle au moyen de plusieurs fils de cuivre monobrin rigides, de section 1,5 mm² et soudés par paires, et les moyens de connexion MCj peuvent comporter des câbles souples en cuivre multibrins, de classe III et de section 4 mm².

Ce type d'ensemble E est par exemple adapté à la dissipation d'une quantité d'énergie maximale égale à environ 9000 Joules dans un intervalle de temps d'environ deux minutes.

Dans la variante de réalisation non limitative illustrée sur la figure 3, l'ensemble E comprend trois lampes CE1 à CE3. Par exemple, chaque la lampe CEi (i = 1 à 3) est une ampoule 12 V de type H4 dissipant 60 W et montée sur une douille support.

On notera que l'une au moins des lampes CEi (ou au moins un autre composant électrique, comme par exemple un buzzer) peut éventuellement servir de témoin de niveau de décharge. On comprendra en effet que tant que la tension aux bornes d'une lampe demeure supérieure à un seuil (fonction du type de cette lampe, par exemple égal à 0,5 V), la lumière qu'elle émet demeure visible. De même, tant que la tension aux bornes d'un moyen d'alarme demeure supérieure à un seuil (fonction du type de ce moyen d'alarme), il peut émettre une alarme sonore audible. Par conséquent, lorsque l'on s'aperçoit que la lampe (ou le moyen d'alarme) n'émet plus de lumière visible (ou d'alarme sonore audible), on en déduit que la décharge du super-condensateur SC est terminée.

On notera également, comme illustré non limitativement sur la figure 1, que lorsque l'un des composants électriques CEi de l'ensemble E est une lampe qui sert de témoin de niveau de décharge, il est avantageux que le boîtier B possède un capot CB muni d'une fenêtre F située devant cette lampe et définie par une simple ouverture ou bien par un matériau transparent. Cela permet en effet au technicien qui supervise la décharge de visualiser la lumière qui est émise par cette lampe.

On notera également qu'un boîtier B peut éventuellement comporter plusieurs (au moins deux) ensembles E, différents ou identiques, montés en parallèle et/ou en série, afin d'être adapté à la décharge d'un super-condensateur SC disposant d'une quantité d'énergie électrique maximale qui est supérieure à celle que peut consommer dans un intervalle de temps prédéfini un unique ensemble E. On entend ici par « ensembles différents » des ensembles pouvant consommer des quantités d'énergie électrique différentes dans un même intervalle de temps prédéfini.

L'invention présente plusieurs avantages, parmi lesquels :
- elle offre un dispositif portatif D très facile d'emploi, puisqu'il suffit de le connecter aux bornes d'un super-condensateur,
- elle offre un dispositif portatif D très facile à manipuler et donc pouvant être transporté à la main en n'importe quel endroit, y compris dans un endroit situé dans un environnement dangereux en terme de sécurité électrique,
- elle permet de décharger rapidement des super-condensateurs, typiquement entre une minute et quelques minutes,
- elle n'induit pas de projection d'étincelles ou de formation d'arcs électriques ou encore d'élévation importante de température, et donc elle ne risque pas d'entraîner une électrocution ou une brûlure.

L'invention ne se limite pas aux modes de réalisation de dispositif électrique portatif décrits ci-avant, seulement à titre d'exemple, mais elle englobe toutes les variantes que pourra envisager l'homme de l'art dans le cadre des revendications ci-après.

## Revendications

1. Dispositif électrique portatif de décharge d'un super-condensateur (D), comprenant i) un boîtier (B) comportant au moins un ensemble électrique (E) purement passif dont la résistance totale est inférieure à 1 ohm et ii) deux moyens de connexion (MCj) connectés aux bornes dudit ensemble (E) ; lesdits deux moyens de connexion (MCj) étant aptes à être connectés temporairement aux bornes dudit super-condensateur (SC) et ledit ensemble électronique étant dimensionné pour consommer, en moins de 10 minutes, et en une seule phase, une quantité d'énergie au moins égale à 90% de la quantité d'énergie maximale pouvant être stockée dans le super-condensateur (SC), en fonction de sa capacité et de la tension maximale pouvant être présente à ses bornes en vue de sa décharge par consommation d'énergie par ledit ensemble (E).

2. Dispositif selon la revendication 1, **caractérisé en ce que** ledit ensemble électrique (E) comprend au moins deux composants électriques (CEi) propres à consommer de l'énergie et montés en série et/ou en parallèle.

3. Dispositif selon la revendication 2, **caractérisé en ce que** lesdits composants électriques (CEi) sont choisis dans un groupe comprenant au moins des résistances, des lampes, et des câbles métalliques de forte section.

4. Dispositif selon la revendication 3, **caractérisé en ce que** certaines desdites résistances sont de type variable.

5. Dispositif selon l'une des revendications 3 et 4, **caractérisé en ce que** ledit ensemble (E) comprend au moins une lampe (CEi) et au moins une résistance (CEi) montées en parallèle.

6. Dispositif selon l'une des revendications 2 à 5, **caractérisé en ce que** l'un au moins desdits composants électriques sert de témoin de niveau de décharge.

7. Dispositif selon l'une des revendications 1 à 6, **caractérisé en ce que** lesdits moyens de connexion (MCj) comprennent des pinces de type crocodile.

8. Dispositif selon la revendication 7, **caractérisé en ce que** lesdites pinces (MCj) sont interchangeables.

9. Dispositif selon l'une des revendications 1 à 8, **caractérisé en ce qu'**il comprend au moins deux ensembles électriques (E) montés en série et/ou en parallèle.

10. Dispositif selon la revendication 9, **caractérisé en ce que** l'ensemble électrique comprend plusieurs résistances en parallèle.

11. Dispositif selon la revendication 10, **caractérisé en ce que** l'ensemble électrique comprend plusieurs résistances en parallèle dont les valeurs de résistance varient moins que du simple au double.

## Patentansprüche

1. Tragbare elektrische Vorrichtung zur Entladung eines Superkondensators, umfassend: i) ein Gehäuse (B), umfassend mindestens eine rein passive elektrische Einheit (E), deren Gesamtwiderstand kleiner als 1 Ohm ist, und ii) zwei Anschlussmittel (MCj), die an die Klemmen der Einheit (E) angeschlossen sind; wobei die zwei Anschlussmittel (MCj) geeignet sind, vorübergehend an die Klemmen des Superkondensators (SC) angeschlossen zu werden, und wobei die elektrische Einheit dimensioniert ist, um innerhalb von weniger als 10 Minuten und in einer einzigen Phase eine Energiemenge mindestens gleich 90 % der maximalen Energiemenge zu verbrauchen, die in dem Superkondensator (SC) gespeichert sein kann, in Abhängigkeit von seiner Kapazität und der maximalen Spannung, die an seinen Klammen vorhanden sein kann, im Hinblick auf seine Entladung durch Energieverbrauch der Einheit (E).

2. Vorrichtung nach Anspruch 1, **dadurch gekennzeichnet, dass** die elektrische Einheit (E) mindestens zwei elektrische Komponenten (CEi) umfasst, die geeignet sind, Energie zu verbrauchen, und in Serie und/oder parallel geschaltet sind.

3. Vorrichtung nach Anspruch 2, **dadurch gekennzeichnet, dass** die elektrischen Komponenten (CEi) in einer Gruppe ausgewählt sind, umfassend mindestens Widerstände, Lampen und Metallkabel mit großem Querschnitt.

4. Vorrichtung nach Anspruch 3, **dadurch gekennzeichnet, dass** gewisse der Widerstände variablen Typs sind.

5. Vorrichtung nach einem der Ansprüche 3 und 4, **dadurch gekennzeichnet, dass** die Einheit (E) mindestens eine Lampe (CEi) und mindestens einen Widerstand (CEi), die parallel geschaltet sind, umfasst.

6. Vorrichtung nach einem der Ansprüche 2 bis 5, **dadurch gekennzeichnet, dass** mindestens eine der elektrischen Komponenten als Entladestandanzeige dient.

7. Vorrichtung nach einem der Ansprüche 1 bis 6, **dadurch gekennzeichnet, dass** die Anschlussmittel (MCj) Krokodilklemmen umfassen.

8. Vorrichtung nach Anspruch 7, **dadurch gekennzeichnet, dass** die Klemmen (MCj) austauschbar sind.

9. Vorrichtung nach einem der Ansprüche 1 bis 8, **dadurch gekennzeichnet, dass** sie mindestens zwei elektrische Einheiten (E) umfasst, die in Serie und/oder parallel geschaltet sind.

10. Vorrichtung nach Anspruch 9, **dadurch gekennzeichnet, dass** die elektrische Einheit mehrere parallel geschaltete Widerstände umfasst.

11. Vorrichtung nach Anspruch 10, **dadurch gekennzeichnet, dass** die elektrische Einheit mehrere parallel geschaltete Widerstände umfasst, deren Widerstandswerte weniger als um das Doppelte variieren.

## Claims

1. A portable electric device for discharging a supercapacitor (D), including i) a housing (B) comprising at least one purely passive electric assembly (E), the total resistance of which is less than 1 ohm and ii) two connection means (MCj) connected to the terminals of said assembly (E); said two connection means (MCj) being able to be connected temporarily to the terminals of said supercapacitor (SC) and said electronic assembly being dimensioned to consume, in less than 10 minutes, and in a single phase, a quantity of energy at least equal to 90% of the maximum quantity of energy able to be stored in the supercapacitor (SC), as a function of its capacity and of the maximum voltage being able to be present at its terminals with a view to its discharging by consumption of energy by said assembly (E).

2. The device according to Claim 1, **characterized in that** said electric assembly (E) includes at least two electric components (CEi) able to consume energy and mounted in series and/or in parallel.

3. The device according to Claim 2, **characterized in that** said electric components (CEi) are selected from a group including at least resistors, lamps, and large-section metallic cables.

4. The device according to Claim 3, **characterized in that** some of said resistors are of variable type.

5. The device according to one of Claims 3 and 4, **characterized in that** said assembly (E) includes at least one lamp (CEi) and at least one resistor (CEi) mounted in parallel.

6. The device according to one of Claims 2 to 5, **characterized in that** at least one of said electric components serves as discharge level indicator.

7. The device according to one of Claims 1 to 6, **characterized in that** said connection means (MCj) include clips of the crocodile type.

8. The device according to Claim 7, **characterized in that** said clips (MCj) are interchangeable.

9. The device according to one of Claims 1 to 8, **characterized in that** it includes at least two electric assemblies (E) mounted in series and/or in parallel.

10. The device according to Claim 9, **characterized in that** the electric assembly includes a plurality of resistors in parallel.

11. The device according to Claim 10, **characterized in that** the electric assembly includes a plurality of resistors in parallel, the resistance values of which vary by less than a factor of two.
